# EUROPEAN PATENT SPECIFICATION

(11) **EP 1 692 906 B1**
(45) Date of publication and mention of the grant of the patent: **05.08.2009**
(21) Application number: 04798010.7
(22) Date of filing: 19.11.2004
(51) Int. Cl.: H04W 4/06

(54) **SHORT MESSAGE FOR VOICE GROUP CALL SERVICE**
KURZNACHRICHT FÜR EINEN VOICE-GRUPPENANRUFDIENST
MESSAGE COURT POUR SERVICE D'APPEL DE GROUPE VOCAL

(30) Priority: 21.11.2003 EP 03026785
(43) Date of publication of application: 23.08.2006
(73) Proprietor: T-Mobile Deutschland GmbH, 53227 Bonn (DE)
(72) Inventor: BRASS, Volker, 53125 Bonn (DE); GRETHE, Walter, 50670 Köln (DE); SIEREDZKI, Thomas, 53227 Bonn (DE)
(74) Representative: Riebling, Peter
(86) International application number: PCT/EP2004/013158
(87) International publication number: WO 2005/055631

(56) References cited:
- WO-A-20/04086715
- US-A- 6 138 011
- US-A1- 2003 100 326
- "Digital cellular telecommunications system (Phase 2+); Voice Group Call Service (VGCS); Stage 2 (3GPP TS 43.068 version 5.2.0 Release 5); ETSI TS 143 068" ETSI STANDARDS, EUROPEAN TELECOMMUNICATIONS STANDARDS INSTITUTE, SOPHIA-ANTIPO, FR, vol. 3-CN1, no. V520, December 2002 (2002-12), XP014010506 ISSN: 0000-0001

## Description

The present invention generally relates to the field of voice group services in mobile communication networks, and in particular to Voice Group Call Services (VGCS).

Voice Group Call Service is a call that can be established between members of a group in numerous cells of the mobile telecommunication network simultaneously. These cells define the service area. All subscribers belonging to the group have the possibility to listen to the call in the service area. It is also possible to participate in the call individually. Service subscribers of the radio network can become group members on a network wide basis to one or more groups pre-defined in the network by a corresponding group identification (group ID). The membership enables them to receive voice group calls associated with that group ID. In addition, certain group members are entitled by their subscription to initiate Voice Group Calls (VGC). In addition to subscriber details in the Home Location Register (HLR), it is necessary for the mobile station (MS) to be aware of its group membership by storing details on the Subscriber Identity Module (SIM). This is required because it responds to notification messages which include only the group call relevant information,(i.e. no IMSI or TMSI details). Having become a group member, each service subscriber can set to active state or deactive state the group ID or any one out of his several group IDs on the SIM. In active state the subscriber can initiate VGCs to that group ID. When in deactive state the subscriber can not make VGCs to the group and the mobile station ignores any notification for that group ID.

A group call area can be restricted to a single Mobile Switching Center (MSC) area or can exceed one MSC area (implementation option). A voice group call is initiated by a calling subscriber by a related man machine interface action for the service selection and the group ID dialled. The MSC in which the voice group call is initiated obtains by requesting a Group Call Register GCR the group call attributes. The GCR is a functionality in the network containing the group call attributes. This GCR interrogation after call initiation also determines whether the MSC acts as group call Anchor- or as group call Relay-MSC. A group call Anchor-MSC is responsible for managing and maintaining a particular VGC. The group call Anchor-MSC is determined as the one controlling the cells of the group call area. For VGCSs where the group call area exceeds an MSC area, the group call Anchor-MSC is predefined in the network. A group call Relay-MSC controls cells of a group call area which are not under control of the group call Anchor-MSC for those voice group call services where the group call area exceeds one MSC area.
If the MSC is not the Anchor-MSC then the call will be "forwarded" from the Relay-MSC to the respective Anchor-MSC (information also delivered by GCR) and further "call-establishment" is done by the Anchor-MSC.

When a calling subscriber (talker) initiates a voice group call, one voice group call channel is established in each cell of the group call area and notifications for that call is sent in each of these cells. A voice group call channel is a downlink to be allocated in each cell of the group call area for a particular voice group call. All mobile stations (listeners) being service subscribers for that Voice Group Call in one cell listen to the common downlink. Of course it is possible to change the talker at any time, so that one of the listeners of the group becomes the talker and the previous talker becomes a listener.

The standards of Voice Group Call Service are specified in the technical specification ETSI TS 143 069, V5.2.0, December 2002: "Digital cellular telecommunication system (Phase 2+); Voice Group Call Service (VGCS); Stage 2; 3GPP TS 43.068 version 5.2.0 Rel. 5.

US 6 138 011 A discloses a method and apparatus for providing dispatch service to an existing telephone network, wherein in addition to dispatch or group voice communications also dispatch or group short message service is facilitated.

US 2003/0100326 A1 relates to a group location and route sharing system for communication units in a trunked communication system, wherein the communication units are engaged in a group voice call communication. Subscription and location data can be sent as a supplementary information to the group voice call communication by using an underlying packet transport layer.

It is the object of the invention to enhance the conventional voice group call service by providing an additional communication service without changing the general architecture of the communication network.

This object is achieved by providing a method and a communication system as disclosed in the independent claims.

Other features which are considered to be characteristic for the invention are set forth in the appended claims.

The short message (SM) for voice group call service according to the present invention is designed to provide all listeners of a voice group call with additional text- or binary-information via short message service. Preferably this is done by sending a short message mobile terminated (SM MT) to all listeners and to the talker of the group, preferably in unacknowledged mode.
The text- and/or binary message can be sent and received simultaneous to an ongoing group call.

The receiving of the SM by group members currently not partaking in the listener mode or talker mode, but subscribed for the ongoing VGC is not supported by this feature.

The SM for VGCS follows the structure of a normal Point-to-Point-SMS (PtP-SMS) in parallel to an ongoing PtP-voice- or PtP-cs-data-call as currently standardised by 3GPP as most as possible.

In addition of providing the receiving of a SM (SM MT) it is also possible to provide the sending of a SM from the current talker to the network as short message mobile originated (SM MO). Here it may be a further option to the send this SM in acknowledged mode.

The receiving of the SM by group members currently not partaking in the listener mode or talker mode, but subscribed for the ongoing VGS is not supported by this feature.

The SMS will be addressed by the associated Voice Group Call REFERENCE. The group call reference is a concatenated sequence of the group ID (as the least significant part) and the group call area ID (as the most significant part).

Further options:
a) If the current talker is sending a SM and during the sending the talker intends to end his speaking, it is necessary that the MS will hold the uplink until the SM is sent completely to the network. This may cause pauses in the conversation (in the case that other MS are requesting the uplink).
b) Sending and Receiving of a SM in parallel to a ongoing voice group call will be unacknowledged. It may be an further option to acknowledge the SM sent by the current talker by the network. In this case it has to be solved if the network acknowledge a SMS and MS which has sent the SMS is not the current talker any more.
c) There is no interaction with GPRS and SM for this feature.

In the following the invention will be described in with reference to the appended drawings.
Figure 1: Functional voice group call architecture with a group call register.
Figure 2: Transfer of a SM to members of a VGCS.
Figure 3: Transfer of a SM from the current talker of a VGCS.

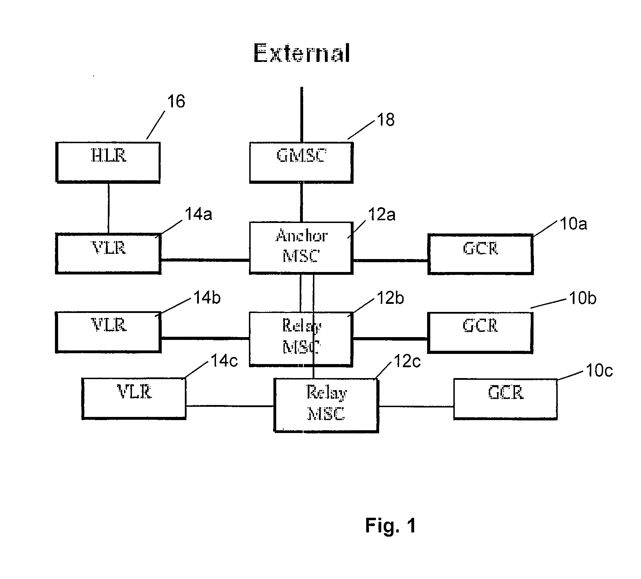

The general architecture of GSM is maintained. In addition, a network function is required which is used for registration of the group call attributes, the group call register (GCR) 10a, 10b, 10c. The GCR function is mainly a database function, holding information about voice group calls. The signalling between the entities shown in figure 1 shall be as defined in the following.

The Mobile Switching Center (MSC) 12a, 12b, 12c containing the cell within which this voice group call is initiated performs subscription checking against Visitor Location Register (VLR) 14a, 14b, 14c and Home Location Register 16 records. It then consults its GCR 10a, 10b, 10c, respectively, to determine the group call attributes related to its MSC area and whether it is the group call Anchor-MSC 12a for that voice group call. If it is not, the GCR provides with the group call reference and the routing information identifying the group call Anchor-MSC 12a to the originating MSC. The originating MSC then routes the voice group call to the Anchor-MSC 12a. If the originating MSC is the group call Anchor-MSC 12a, along with the group call attributes, the respective GCR 10a provides information on all group call Relay-MSCs 12b, 12c to be involved. The group call Anchor-MSC 12a sets up links to all group call Relay-MSCs 12b, 12c. Each MSC 12a, 12b, 12c involved in a voice group call obtains its proper group call attributes from the GCR 10a, 10b, 10c related to the respective MSC.

The GCR 10a, 10b, 10c holds for a related MSC area for each group ID and cells from which voice group calls can be established by service subscribers the group call reference to be used for a voice group call to be established and an indication whether the originating MSC is the group call Anchor-MSC 12a. If the originating MSC is the group call Anchor-MSC 12a, the GCR 10a provides the group call attributes related to that group call reference to the originating MSC and the originating MSC establishes the voice group call. If the originating MSC is not the Anchor-MSC 12a, the GCR 10a provides the group call reference plus the routing information identifying the Anchor-MSC 12a to the originating MSC and the originating MSC routes the voice group call to the Anchor-MSC 12a.

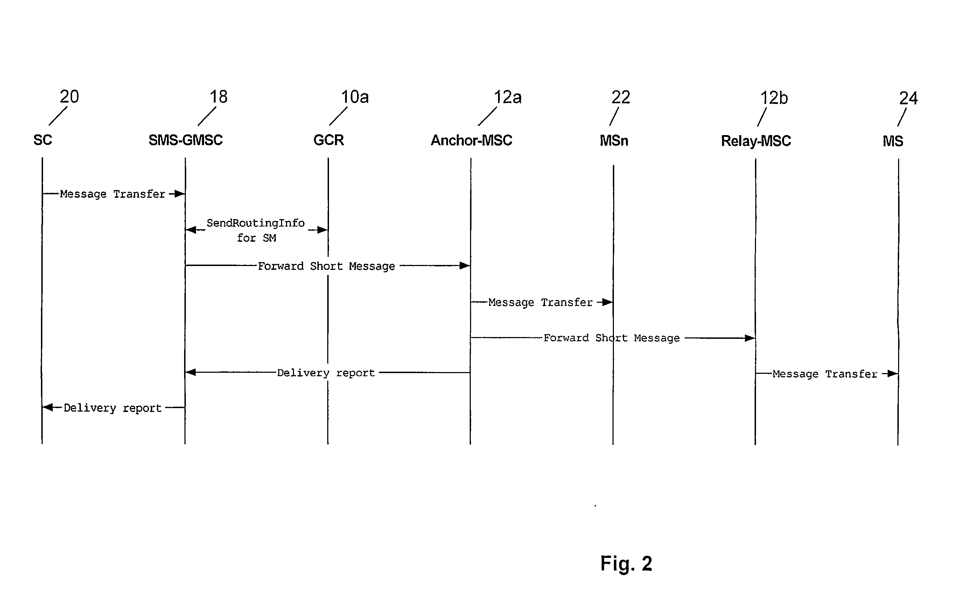

Figure 2 shows the signalling in case that a SME, e.g. a mobile station or a server, in the network requests the short message service center (SC) 20 to send a SM to the members of a VGC, indicated as MSn 22, MSm 24. In this case, where the destination of a SM is not a MSISDN, but a VGC-REFERENCE, the SC interrogates the GCR in order to retrieve the routing information of the Anchor-MSC for this VGC. That followed the SC forwards the SM to the appointed Anchor-MSC for this VGC. The Anchor-MSC itself forwards the SM to all BSS partaking in the VGC and in addition to all Relay-MSCs. The Relay-MSCs in turn are responsible to send the SM to all respective BSS for this VGC.

The SM itself is sent on the VGC controlling Signalling Connection Control Part (SCCP) connection (Another solution can be to send the SM on all resource controlling SCCP connections associated to the respective VGC). The BSS is responsible to send this SM on the respective Slow Associated Control Channel (SACCH) of all Traffic Channels (TCHs) where this VGC is established. In this case the SM will not be acknowledged.
A delivery report can be generated by the current talker of the group (not shown in Figure 2).

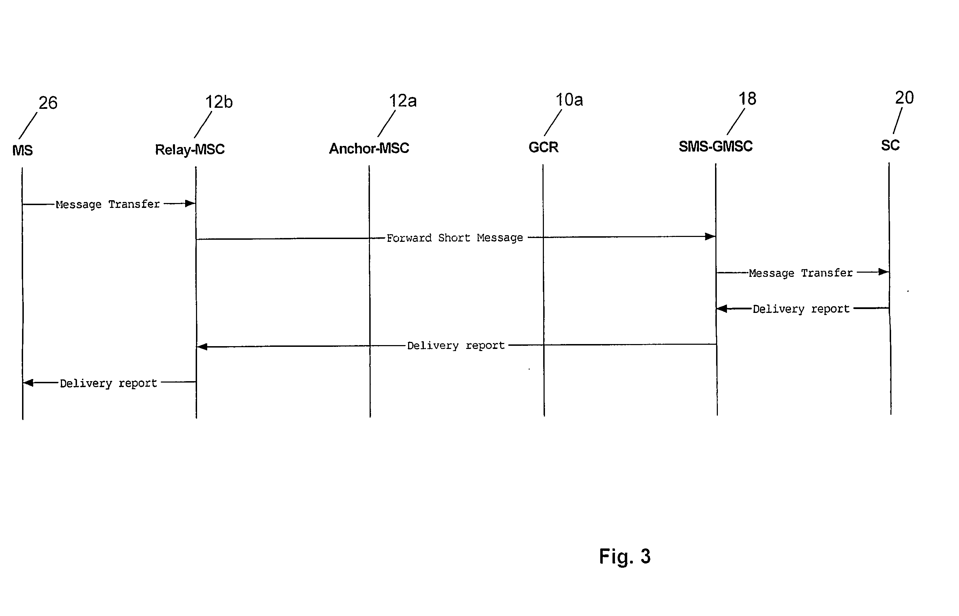

As shown in Figure 3, it is possible that the current talker is able to send a SM. In this case the MS 26 of the current talker will send the SM via the SACCH of the respective uplink-channel on the resource controlling SCCP connection to the MSC 12b analogue to the sending of a PtP-SMS via the respective SACCH. In this case the destination of the SM can be either a MSISDN (or similar for a PtP-SM) or a VGC-REFERENCE. In the first case the SM is forwarded to the SC and there it will be handled according to normal PtP-SM. In the second case the SM is handled as accordingly to the described procedures in this chapter.
In this case an acknowledgement of the SM can be realised. The acknowledgement is sent from the MSC to the BSS on the resource controlling SCCP connection. The acknowledgement of the SM sent from the talker can be realised, independent from the chosen channel-model for VGC.

### List of reference numerals and abbreviations

| | |
|---|---|
| 10a, 10b, 10c | Group Call Register |
| 12a, 12b, 12c | Mobile Switching Center |
| 14a, 14b, 14c | Visitor Location Register |
| 16 | Home Location Register |
| 18 | Gateway Mobile Switching Center |
| 20 | Short Message Service Center |
| 22 | Mobile Station |
| 24 | Mobile Station |
| 26 | Mobile Station |
| | |
| GCR | Group Call Register |
| IMSI | International Mobile Subscriber Identity |
| MO | Mobile originated |
| MS | Mobile Station |
| MSC | Mobile Switching Center |
| MT | Mobile terminated |
| PtP | Point-to-Point |
| SACCH | Slow Associated Control Channel |
| SC | (Short Message) Service Center |
| SCCP | Signalling Connection Control Part |
| SM | Short Message |
| SME | Short Message Entity |
| TMSI | Temporary Mobile Subcriber Identity |
| VGC | Voice Group Call |
| VGCS. | Voice Group Call Service |

## Claims

1. Method for transmitting text- and/or binary information in addition to voice information for a talker - if present - and at least one listener of a Voice Group Call, VGC, by sending a special, dedicated signal to all listeners and to the talker, wherein the special dedicated signal is a short message mobile terminated, SM MT, **characterized in that**
the Short Message is sent to the listeners in unacknowledged mode and the listeners are addressed by an associated Voice Group Call reference, VGC-reference, wherein the Short Message can be sent and received simultaneous by to an ongoing voice group call and follows the structure of a regular Point-to-Point-SMS in parallel to an ongoing Point-to-Point-voice- or Point-to-Point-circuit switched-data-call.

2. Method according to claim 1, **characterized in that** the Short Message is sent from the current talker to the network in form of a short message mobile originated, SM MO.

3. Method according to claim 2, **characterized in that** the SM MO is sent in acknowledged mode.

4. Method according to any of claims 1-3, **characterized in that** if the current talker is sending a Short Message via a Mobile Station (22, 24, 26) and during the sending the talker intends to end his speaking, the Mobile Station will hold the uplink until the Short Message is sent completely to the network.

5. Method according to any of claims 1-4, **characterized in that** a Short Message Entity, SME, in the network requests a Short Message Service Center, SC, (20) to send a SM to the members of a VGC, the SC (20) interrogates a Group Call Register, GCR, (10a, 10b, 10c) in order to retrieve the routing information of an Anchor-Mobile Switching Center, Anchor-MSC, (12a) for this VGC, the SC forwards the SM to an appointed Anchor-MSC for this VGC, the Anchor-MSC itself forwards the SM to all base station subsystems, BSS, partaking in the VGC and in addition to all Relay-MSCs (12b, 12c), the Relay-MSCs send the SM to all respective BSS for this VGC, which transmit it to the listeners.

6. Method according to any of claims 1-5, **characterized in that** the current talker sends a SM via a Slow Associated Control Channel, SACCH, of an respective uplink-channel on a resource controlling signalling connection control part, SCCP, to the MSC (12a) analogue to the sending of a PtP-SMS via the respective SACCH, where the destination of the SM can be either a Mobile Subscriber ISDN, MSISDN, or a VGC-reference.

7. Method according to any of claims 1-6, **characterized in that** by using the MSISDN the SM is forwarded to the SC (20) and there it is handled according to normal PtP-SM.

8. Mobile communication system with at least one logical unit for controlling signal exchange between the members of a Voice Call Group, VCG, and with additional functional processing means for transmitting text- and/or binary information to one or more users of the Voice Group, wherein the text- and/or binary information is a short message, SM, **characterized in that** the system is adapted such that the short message is sent in unacknowledged mode and is assigned an associated Voice Group Call reference, VGC-reference, for addressing the members of the VCG, wherein the SM can be sent and received simultaneously to an ongoing voice group call and follows, the structure of a regular Point-to-Point-SMS to be transmitted in parallel to an ongoing Point-to-Point-voice- or Point-to-Point-circuit switched-data-call.

## Patentansprüche

1. Verfahren zum Übertragen von Text- und/oder binärer Information zusätzlich zur Sprachinformation für einen Sprecher - wenn anwesend - und mindestens einen Hörer eines Gruppenrufs, Voice Group Call / VGC, durch Senden eines speziellen dedizierten Signals an alle Hörer und an den Sprecher, wobei das spezielle dedizierte Signal eine Kurznachricht an ein mobiles Endgerät, Short Message Mobile Terminated / SM MT, ist, **dadurch gekennzeichnet, dass**
die Kurznachricht im unbestätigten Modus an die Hörer gesendet wird und die Hörer durch eine zugeordnete Gruppenrufreferenz, VGC-Referenz, adressiert werden, wobei die Kurznachricht gleichzeitig zu einem laufenden Gruppenruf gesendet und empfangen werden kann und der Struktur einer regulären Point-to-Point-SMS parallel zu einem laufenden Point-to-Point-Sprach- oder leitungsvermittelten Point-to-Point-Datenruf folgt.

2. Verfahren nach Anspruch 1, **dadurch gekennzeichnet, dass** die Kurznachricht in Form einer von einem mobilen Endgerät stammenden Kurznachricht, Short Message Mobile Originated / SM MO, vom aktuellen Sprecher an das Netz gesendet wird.

3. Verfahren nach Anspruch 2, **dadurch gekennzeichnet, dass** die SM MO im bestätigten Modus gesendet wird.

4. Verfahren nach einem der Ansprüche 1 bis 3, **dadurch gekennzeichnet, dass**, wenn der aktuelle Sprecher über eine mobile Station (22, 24, 26) eine Kurznachricht sendet und während des Sendens der Sprecher sein Sprechen beenden möchte, die mobile Station die Aufwärtsstrecke aufrecht erhält, bis die Kurznachricht vollständig an das Netz gesendet ist.

5. Verfahren nach einem der Ansprüche 1 bis 4, **dadurch gekennzeichnet, dass** eine Kurznachrichtenentität, Short Message Entity / SME, im Netz bei einem Kurznachrichtendienstzentrum, Short Message Service Center / SC, (20) anfordert, dass eine SM an die Mitglieder eines VGC gesendet wird, der SC (20) ein Gruppenrufregister GCR (10a, 10b, 10c) abfragt, um die Leitweglenkungsinformation eines Anker-MSC (12a) für diesen VGC abzurufen, der SC die SM an einen für diesen VGC ernannten Anker-MSC weiterleitet, der Anker-MSC selbst die SM an alle am VGC beteiligten Basisstation-Subsysteme, BSS, und zusätzlich an alle Relay-MSCs (12b, 12c) weiterleitet, und die Relay-MSCs die SM an alle entsprechenden BSS für diesen VGC senden, welche sie an die Hörer übertragen.

6. Verfahren nach einem der Ansprüche 1 bis 5, **dadurch gekennzeichnet, dass** der aktuelle Sprecher eine SM über einen langsamen zugeordneten Steuerungskanal, Slow Associated Control Channel / SACCH, eines entsprechenden Aufwärtsstreckenkanals auf einem ressourcensteuernden Signalisierungs-Verbindungs-Steuerteil, Signalling Connection Control Part / SCCP, an den MSC (12a) sendet, analog zum Senden einer PtP-SMS über den entsprechenden SACCH, wobei die Zieladresse der SM entweder ein mobiles Teilnehmer-ISDN, MSISDN, oder eine VGC-Referenz sein kann.

7. Verfahren nach einem der Ansprüche 1 bis 6, **dadurch gekennzeichnet, dass** durch Verwendung des MSISDN die SM an den SC (20) weitergeleitet wird und dort gemäß einer normalen PtP-SM gehandhabt wird.

8. Mobilkommunikationssystem mit mindestens einer logischen Einheit zum Steuern eines Signalaustauschs zwischen den Mitgliedern einer Sprachrufgruppe, Voice Call Group / VCG, und mit zusätzlichen Funktionsverarbeitungsmitteln zum Übertragen von Text- und/oder binärer Information an einen oder mehrere Benutzer der Sprachrufgruppe, wobei die Text- und/oder binäre Information eine Kurznachricht, SM, ist,
**dadurch gekennzeichnet, dass** das System dazu ausgelegt ist, dass die Kurznachricht im unbestätigten Modus gesendet wird und einer zugeordneten Gruppenruf-Referenz, VGC-Referenz, zugewiesen wird, um die Mitglieder der VCG zu adressieren, wobei die SM gleichzeitig an einen laufenden Gruppenruf gesendet und von diesem empfangen werden kann und der Struktur einer regulären Point-to-Point-SMS folgt, die parallel zu einem laufenden Point-to-Point-Sprach- oder leitungsvermittelten Point-to-Point-Datenruf zu übertragen ist.

## Revendications

1. Procédé pour transmettre des informations sous forme de texte et/ou sous forme binaire en plus d'informations vocales pour un locuteur (s'il y en a un) et au moins un auditeur d'un appel de groupe, VGC, en envoyant un signal spécial, spécialisé, à tous les auditeurs et au locuteur, ce signal spécialisé étant un message court adressé à un mobile, SM MT,
**caractérisé en ce que** le message court est envoyé aux auditeurs sans accusé de réception et les auditeurs sont adressés par une référence d'appel de groupe associée, référence, VGC, étant précisé que le message court peut être envoyé et reçu simultanément par/à un appel de groupe en cours et suit la structure d'un SMS point à point régulier parallèlement à un appel de données à commutation vocale point à point ou de circuit point à point en cours.

2. Procédé selon la revendication 1, **caractérisé en ce que** le message court est envoyé à partir du locuteur actuel vers le réseau sous la forme d'un message court émis à partir d'un mobile, SM MO.

3. Procédé selon la revendication 2, **caractérisé en ce que** le SM MO est envoyé avec accusé de réception.

4. Procédé selon l'une quelconque des revendications 1 à 3, **caractérisé en ce que** si le locuteur actuel est en train d'envoyer un message court par l'intermédiaire d'une station mobile (22, 24, 26) et que pendant l'envoi le locuteur a l'intention de mettre fin à sa conversation, la station mobile maintiendra la liaison montante jusqu'à ce que le message court soit envoyé complètement au réseau.

5. Procédé selon l'une quelconque des revendications 1 à 4, **caractérisé en ce qu'**une entité de message court, SME, prévue dans le réseau demande à un centre de service de message court, SC, (20) d'envoyer un message court aux membres d'un appel de groupe VGC, le centre SC (20) interroge un registre d'appel de groupe, GCR, (10a, 10b, 10c) afin de récupérer les informations de routage d'un centre de commutation mobile d'origine, Anchor-MSC, (12a) pour cet appel de groupe VGC, le centre SC transmet le message court à un centre d'origine (12a) désigné pour ce VGC, le centre d'origine (12a) lui-même transmet le message court à tous les sous-systèmes de station de base, BSS, qui participent à l'appel de groupe VGC et, en plus, à tous les centres de commutation mobile relais (12b, 12c), et les centres de commutation mobile relais envoient le message court à tous les sous-systèmes BSS respectifs pour cet appel de groupe VGC, qui le transmettent aux auditeurs.

6. Procédé selon l'une quelconque des revendications 1 à 5, **caractérisé en ce que** le locuteur actuel envoie un message court par l'intermédiaire d'un canal de commande associé lent, SACCH, d'un canal montant respectif sur une ressource qui commande une partie de commande de connexion de signalisation, SCCP, au centre de commutation mobile (12a), d'une manière analogue à l'envoi d'un PtP-SMS par l'intermédiaire du SACCH respectif, où la destination du message court peut être soit un n°RNIS d'abonné mobile, MSISDN, soit une référence VGC.

7. Procédé selon l'une quelconque des revendications 1 à 6, **caractérisé en ce qu'**en utilisant le n°RNIS le message court est envoyé au centre de service SC (20), où il est traité selon le PtP-SM.

8. Système de communication mobile avec au moins une unité logique pour commander un échange de signaux entre les membres d'un appel de groupe, VCG, et avec des moyens de traitement fonctionnel supplémentaires pour transmettre des informations sous forme de texte et/ou sous forme binaire à un ou plusieurs utilisateurs du groupe, dans lequel les informations sous forme de texte et/ou sous forme binaire sont constituées par un message court, SM,
**caractérisé en ce qu'**il est adapté pour que le message court soit envoyé sans accusé de réception et qu'une référence d'appel de groupe associée, référence VGC, lui soit attribuée pour qu'il soit adressé aux membres de l'appel de groupe VCG, étant précisé que le message court peut être envoyé et reçu simultanément à un appel de groupe en cours et suit la structure d'un SMS point à point régulier à transmettre parallèlement à un appel de données à commutation vocale point à point ou de circuit point à point en cours.
